# FASCICULE DE BREVET EUROPEEN

(11) **EP 0 804 973 B1**
(45) Date de publication et mention de la délivrance du brevet: **04.06.2003**
(21) Numéro de dépôt: 97400825.2
(22) Date de dépôt: 11.04.1997
(51) Int. Cl.: B05D 7/16, B05D 1/18, B05D 1/20

(54) **Traitement de surface de tole metallique**
Oberflächebehandlung von Metallblechen
Surface treatment of metal sheets

(30) Priorité: 26.04.1996 FR 9605267
(43) Date de publication de la demande: 05.11.1997
(73) Titulaire: SOLLAC S.A., 92800 Puteaux (FR)
(72) Inventeur: Fousse, Daniel, 57050 Plappeville (FR)
(74) Mandataire: Ventavoli, Roger

(56) Documents cités:
- EP-A- 0 003 071
- EP-A- 0 466 044
- EP-A- 0 484 886
- EP-A- 0 511 548
- FR-A- 1 395 228
- FR-A- 2 166 404
- US-A- 3 284 248
- US-A- 5 103 550
- US-A- 5 435 839
- STRATMANN M: "STRUKTUR UND STABILITAET CHEMISCH MODIFIZIERTER STAHLOBERFLAECHEN ZUR VERBESSERUNG DER HAFTUNG" STAHL UND EISEN, vol. 113, no. 5, 17 mai 1993, DUSSELDORF DE, pages 101-107, 157, XP000365135
- G.ROBERTS: "Langmuir-Blodgett Films" 1991 , PLENUM PUBLISHING CORP. , NEW YORK US XP002039426 18016 * page 27, alinéa 2.3 - page 45, alinéa 2.4.2 * * page 93, alinéa 3.1 - page 98, alinéa 3.2 * *spécialement paragraphe 2.3 et page 96 ligne 6 avec la figure 3.1 page 95*

## Description

L'invention concerne un traitement de surface de tôles métalliques, notamment d'acier nu ou revêtu d'une couche métallique.

On connaît des traitements de surface qui servent à préparer une surface métallique au dépôt d'un revêtement (comme la chromatation), à protéger contre la corrosion (comme le huilage), ou encore à lubrifier la surface pour des opérations de mise en forme ou d'emboutissage (également comme le huilage).

Le traitement de surface selon l'invention concerne plus particulièrement ces trois types d'application.

Le premier domaine est celui de la préparation d'une surface au dépôt d'un revêtement.

Pour fabriquer des emballages alimentaires, on utilise couramment des tôles étamées (fer blanc) revêtues d'une couche de vernis protecteur.

L'application du vernis protecteur nécessite un traitement préalable de la surface métallique, nécessaire en particulier pour obtenir une bonne adhérence du vernis sur la surface, y compris en milieu aqueux, en milieu solvant, ou en milieu corrosif.

Ce traitement préalable de la surface métallique consiste couramment en un traitement de passivation de type chromatation chimique ou électrochimique.

La mise en oeuvre de ces traitements entraîne donc généralement des risques de corrosion et de pollution liés au chrome, notamment lors de la manipulation des solutions de traitement et au niveau des effluents de traitement.

Le document US 5 103 550 décrit un procédé d'application de vernis sur la surface d'une tôle métallique d'aluminium dans lequel :
- on effectue un traitement de surface préalable qui consiste à :
   a) anodiser ladite surface pour former une surface oxydée,
   b) appliquer une pellicule homogène d'un produit organique à base d'acides ou d'esters phosphoniques ou phosphiniques , ou de sels de ces acides, polymérisés ou non,
   c) le cas échéant, à l'aide d'un solvant dudit produit organique, éliminer ensuite de ladite pellicule la quantité de produit organique qui n'est pas fixée sur ladite surface, par rinçage, et sécher éventuellement ladite pellicule,
- et on applique immédiatement un vernis sur la surface traitée, par exemple un vernis polychlorure de vinyle modifié époxy d'usage courant dans le domaine des tôles pour emballage alimentaire.

Le traitement de surface décrit dans ce document remplace avantageusement un traitement de chromatation pour favoriser l'adhérence du vernis à la tôle.

Mais ce traitement de surface nécessite une étape préalable d'anodisation, ce qui complique le procédé ; par ailleurs cette étape n'est pas forcément réalisable sur d'autres types de substrats, comme sur des tôles d'acier revêtues d'une couche métallique, par exemple des tôles d'acier étamées, chromées ou zinguées.

Mais ce traitement de surface nécessite l'application immédiate du vernis, la surface traitée n'étant pas susceptible de conserver ses propriétés favorisant l'adhérence du vernis.

Un tel traitement de surface ne permet donc pas d'envisager de stocker des tôles traitées, ce qui est un grave inconvénient.

Le document EP 484 886 décrit un procédé d'application d'un polymère carbofluoré sur la surface d'une tôle métallique, notamment d'aluminium, dans lequel :
- on traite ladite surface par application d'une pellicule homogène monomoléculaire d'un produit organique (ou « agent de couplage ») à base de molécules dont l'ossature principale est en forme de chaîne carbonée linéaire, dotée, à une seule extrémité, d'un radical polaire siloxane,
- on applique immédiatement ledit polymère carbofluoré,
- puis on fait réagir ledit polymère sur ladite pellicule et on fait réticuler ledit polymère, notamment par irradiation.

Selon ce document, la réaction, qui provoque l'adhérence, entre la pellicule d'agent de couplage et la couche de polymère appliquée, suppose des liaisons C=C ou C≡C , notamment dans la chaîne carbonée linéaire du côté de l'extrémité opposée à celle du radical siloxane.

Ainsi, l'inconvénient d'un tel procédé est qu'il nécessite l'application d'une pellicule seulement monomoléculaire d'agent de couplage, ce qui est parfois difficile à obtenir par des méthodes simples.

Ainsi, l'inconvénient d'un tel procédé est également qu'il nécessite une étape de réaction, par exemple par irradiation, pour faire réagir et adhérer la couche de polymère sur la pellicule de traitement de surface.

Ainsi, l'inconvénient d'un tel procédé est aussi qu'une surface traitée ne peut pas être stockée sans perdre ses propriétés de « couplage » , puisque les liaisons C=C ou C≡C sont progressivement oxydées, notamment sous exposition naturelle aux rayonnement ultra-violets.

Les deuxième et troisième domaines d'application possible de l'invention sont ceux de la protection contre la corrosion et de la lubrification pour mise en forme, notamment emboutissage.

En sortie de fabrication, on huile généralement les tôles pour assurer une protection contre la corrosion, au moins temporaire, c'est à dire au moins pendant un temps de stockage (au moins une journée, voire parfois quelques mois).

Les huiles qu'on utilise pour cette protection doivent également être adaptées pour faciliter la mise en forme, directement en sortie de stockage et sans dégraissage préalable.

Les huiles courantes prévues pour ces applications sont par exemple à base de di-octyl-sébaçate ou d'acétyl-tributyl-citrate.

Quand on cherche à revêtir des tôles provenant d'un stockage, donc généralement huilées, il convient alors au préalable de les dégraisser.

Entre la sortie de fabrication des tôles et l'entrée dans l'installation de revêtement (vernissage ou peinture par exemple), on distingue alors au moins trois opérations : huilage, dégraissage, chromatation.

En outre, malgré le dégraissage préalable au revêtement, au moment de l'application du vernis, il est fréquent de constater des "refus de vernis" c'est à dire la présence de zones de la surface de tôle non couvertes par le vernis.

Ces refus de vernis proviennent en général de défauts et de difficultés de dégraissage et peuvent conduire à des rebuts importants.

L'invention a pour but un traitement de surface de tôles métalliques applicable pour la protection contre la corrosion et la lubrification d'une part, pour la préparation au revêtement tout en limitant les refus de vernis d'autre part.

L'invention a donc pour objet un traitement de surface de tôle métallique, caractérisé en ce que :
- on applique sur ladite surface métallique une pellicule homogène d'un produit organique à base de molécules dont l'ossature principale est en forme de chaîne linéaire apolaire formée de liaisons carbone-carbone saturées à une extrémité et dotée, seulement à l'autre extrémité, d'un radical polaire,
- on chauffe ladite pellicule à une température et pendant une durée adaptées pour fixer une partie dudit produit sur ladite surface et pour faire partiellement réticuler ledit produit sur ladite surface,
- et, le cas échéant, à l'aide d'un solvant dudit produit organique, on élimine ensuite de ladite pellicule la quantité de produit organique qui n'est pas fixée et/ou réticulée sur ladite surface.

Selon le mode de réalisation retenu, l'application de la pellicule et son chauffage peuvent être successifs ou simultanés.

L'invention peut également présenter une ou plusieurs des caractéristiques suivantes :
- on adapte les conditions d'application et de chauffage de ladite pellicule de manière à ce que, après traitement, la proportion desdits radicaux polaires à la surface de la pellicule soit supérieure à la proportion stoechiométrique de ces radicaux dans les molécules dudit produit organique .
- ledit radical polaire est choisi parmi l'un au moins des radicaux suivants : acide carboxylique, phénolique, époxy, vinyle, amine ou silane.

L'invention a également pour objet une tôle d'acier, nu ou revêtu d'une couche métallique, revêtue en surface externe d'un film dudit produit organique, réticulé et fixé, résultant du traitement de surface de ladite tôle selon l'invention.

L'invention peut également présenter une ou plusieurs des caractéristiques suivantes :
- l'épaisseur dudit film comprend au moins deux couches monomoléculaires dudit produit organique.
- dans le cas d'une tôle d'acier revêtu d'une couche métallique, ladite couche métallique est en zinc, alliage de zinc, chrome ou alliage de chrome, étain, ou alliage d'étain.

L'invention a également pour objet un procédé d'application de vernis sur la surface d'une tôle d'acier, nu ou revêtu d'une couche métallique, dans lequel :
- dans une première étape, on traite ladite surface selon l'invention,
- puis, dans une deuxième étape, on applique à proprement parler ledit vernis directement sur ladite surface traitée.

L'invention peut également présenter une ou plusieurs des caractéristiques suivantes :
- la période s'écoulant entre ladite première étape et ladite seconde étape est supérieure à 1 jour.
- ledit vernis est de type polaire.

L'invention a également pour objet l'utilisation d'une tôle d'acier vernie selon l'invention pour la fabrication d'emballage d'aliments liquides ou solides.

L'invention a également pour objet un procédé de mise en forme d'une tôle d'acier, nu ou revêtu d'une couche métallique, à l'aide d'un outil de mise en forme, dans lequel :
- dans une première étape, on traite la surface de la tôle devant être mise en contact avec ledit outil de mise en forme selon l'invention,
- et, dans une deuxième étape, on procède à la mise en forme à proprement parler à l'aide dudit outil.

L'invention peut également présenter la caractéristique selon laquelle la période s'écoulant entre ladite première étape et ladite seconde étape est supérieure à 1 jour.

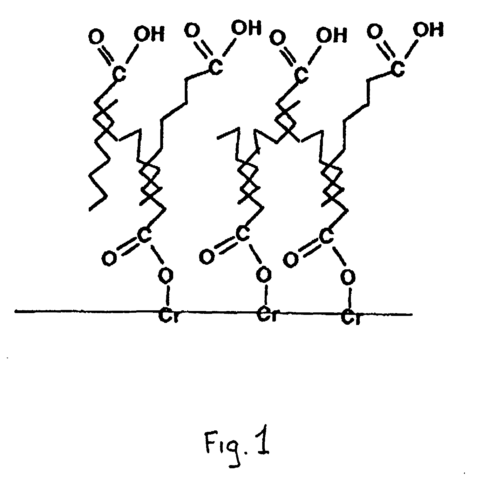

L'invention sera mieux comprise à la lecture de la description qui va suivre, donnée à titre d'exemple non limitatif en référence à la figure 1 qui schématise la structure-type d'un traitement selon l'invention d'une tôle d'acier chromée par un acide gras.

La tôle métallique, dont la surface est à traiter, est par exemple une tôle d'acier, nue ou revêtue d'étain (fer blanc), de chrome ou de zinc.

Par une méthode classique, par exemple d'immersion, d'enduction ou de huilage électrostatique, on applique sur la surface une pellicule homogène de produit organique.

On choisit un produit organique à base de molécules dont l'ossature principale est en forme de chaîne carbonée linéaire apolaire, dotée, à une seule extrémité, d'un radical polaire.

De préférence, le radical polaire est choisi parmi l'un au moins des radicaux suivants : acide carboxylique, phénolique, époxy, vinyle, amine ou silane.

De préférence, le nombre d'atomes de carbone dans la chaîne linéaire d'ossature principale est suffisamment faible pour que le produit soit facile à appliquer à l'état liquide et suffisamment élevé pour ne pas s'évaporer rapidement lors du chauffage de la pellicule appliquée sur la surface.

Ainsi le nombre de carbone successifs dans la chaîne linéaire est de préférence supérieur ou égal à 8.

Selon l'invention, la chaîne linéaire d'ossature principale ne comporte donc pas de ramifications polaires, et, du côté opposé à l'extrémité dotée d'un radical polaire, toutes les liaisons C-C de la chaîne sont saturées.

Cette disposition exclut par exemple l'utilisation d'acide perfluorocarboxylique ou perchlorocarboxylique, car les atomes de fluor ou de chlore greffés sur l'ossature de la molécule de ce produit empêcheraient ou limiteraient l'adhérence d'un vernis appliqué ultérieurement sur la surface traitée, ce qui est l'inverse du but poursuivi par l'invention.

Cette disposition exclut par exemple des chaînes carbonées comportant des fonctions alcoxy en dehors de l'extrémité correspondant au radical polaire, ces fonctions alcoxy conférant un caractère polaire à la chaîne carbonée elle-même, qui nuit à la mise en oeuvre de l'invention.

Ainsi, parmi les produits organiques utilisables pour mettre en oeuvre l'invention, on peut citer l'acide oléique, l'acide palmitique, l'époxyoctane.

Au moment de son application sur la surface, les molécules du produit organique ont tendance à se regrouper spontanément en « boules » pour minimiser leur énergie de surface.

Pour faciliter l'application sur la surface à traiter, ce produit peut être dilué dans un solvant.

Si on utilise un solvant polaire, les radicaux polaires se positionnent à l'extérieur des « boules », alors que en l'absence de solvant ou si on utilise un solvant apolaire, ce sont les chaînes carbonées linéaires apolaires qui sont tournées vers l'extérieur des « boules ».

Après application du produit, on obtient une tôle dont la surface à traiter est revêtue d'une pellicule homogène de produit.

On chauffe ensuite la tôle revêtue de sa pellicule de produit à une température et pendant une durée adaptée pour faire réagir le produit avec la surface métallique et le faire réagir avec lui-même, c'est à dire qu'une partie du produit se fixe sur la surface à traiter et qu'une partie du produit réticule partiellement.

Le chauffage a également pour but de désagréger les « boules » de molécules de manière à ce que les radicaux polaires se tournent vers l'extérieur de la pellicule, vers la surface métallique ou vers la surface externe de la pellicule et de manière à ce que les chaînes carbonées linéaires restent au contraire enchevêtrées dans l'épaisseur de la pellicule.

En cas d'utilisation d'un solvant pour l'application, le chauffage est également adapté pour évaporer ce solvant.

Lorsqu'on utilise de l'acide oléique, on peut par exemple choisir une température de chauffage de 200°C environ pendant 5 secondes environ, ou 140°C environ pendant 5 minutes environ.

De préférence, cette température est au moins égale à 120°C.

De préférence, cette température est environ de 10 à 60°C inférieure à la température d'ébullition ou de décomposition du produit organique.

Selon une variante de l'invention, on applique le produit tout en le faisant réagir et réticuler dans la même opération, par exemple en immergeant la tôle dans un bain dudit produit ; la température du bain et la durée d'immersion sont alors adaptées comme précédemment pour obtenir la fixation et la réticulation d'une partie du produit sur la surface à traiter.

Selon une autre variante de l'invention, on peut même appliquer le produit sur une tôle chaude, chauffée au préalable.

On obtient alors une tôle revêtue d'une pellicule homogène de produit, une partie au moins du produit étant fixée et/ou ayant réticulé sur la surface.

On constate ainsi que les radicaux polaires sont particulièrement importants pour la liaison et la fixation avec la surface à traiter et que les chaînes linéaires apolaires sont particulièrement importantes pour obtenir une réticulation d'une partie du produit de la pellicule appliquée sur la surface.

Les molécules de produit organique de la pellicule appliquée sont considérées comme fixées ou réticulées sur la surface lorsqu'elles sont liées à cette surface soit par une fonction terminale polaire d'une molécule, soit indirectement lorsqu'elles sont imbriquées, enchevêtrées ou réticulées dans une autre molécule de produit directement liée à la surface.

Il est important que les conditions d'application soient adaptées pour appliquer une quantité suffisante de produit correspondant à plusieurs couches monomoléculaires.

Les conditions de chauffage de la pellicule appliquée doivent permettre l'imbrication d'au moins deux couches monomoléculaires par l'intermédiaire des chaînes apolaires enchevêtrées.

Le contrôle de conditions d'application et de chauffage peut être effectué par analyse de surface, comme décrit ci-après.

Le cas échéant, on élimine ensuite de la pellicule appliquée la partie de produit organique qui, au cours du chauffage, ne s'est pas fixée et/ou ne s'est pas réticulée sur la surface ; cette partie non fixée et/ou non réticulée, c'est à dire "libre", peut être considérée comme étant à l'état liquide.

Pour éliminer la partie "libre" de pellicule de produit organique, il suffit par exemple de rincer la tôle dans un solvant dudit produit.

De préférence, le solvant de rinçage présente un caractère polaire.

Après rinçage, on sèche la tôle.

On obtient alors une tôle revêtue en surface externe d'un film dudit produit organique, réticulé et adhérant à la tôle, ce film comprenant au moins deux couches monomoléculaires dudit produit organique.

On peut, à l'aide de moyens d'analyse de surface (par exemple la spectroscopie de photoélectrons ou "XPS"), mesurer la densité surfacique des extrémités des molécules du composé organique, sur la surface externe de la pellicule fixée et réticulée sur la surface métallique à traiter.

Un moyen de contrôle des conditions d'application (quantité suffisante de produit) et de chauffage (orientation convenable des molécules) consiste à vérifier par ces moyens d'analyse que la proportion de radicaux polaires à la surface du film de traitement est supérieure à la proportion stoechiométrique de ces radicaux dans les molécules du produit organique de traitement de surface.

Lorsque le produit organique appliqué est un acide carboxylique, on met alors en évidence un niveau élevé de carboxylates à la surface de la tôle; on mesure ainsi une proportion élevée de radicaux COOH en surface ; dans le cas de l'acide oléique, une proportion supérieure à 10% environ de radicaux COOH en surface du film de traitement est considérée comme un indice de traitement satisfaisant de la surface.

Si le traitement n'est pas satisfaisant, on peut réitérer le traitement sur la surface déjà traitée une première fois et/ou modifier les conditions d'application et/ou de chauffage pour des traitements ultérieurs.

Le traitement selon l'invention revêt donc la surface métallique d'un film très fin, d'une épaisseur correspondant à quelques molécules seulement du produit utilisé.

Ce film très fin est suffisamment réticulé pour résister à l'eau et aux solvants.

Ce film de traitement est fortement lié à la surface métallique.

Ce film de traitement présente une surface externe polaire, comme illustré par la figure 1 qui représente un film de traitement selon l'invention appliqué sur une surface d'acier chromé, le produit organique utilisé pour le traitement étant ici un acide gras.

Les avantages du traitement selon l'invention résultent des propriétés de ce film.

En premier lieu, après le traitement selon l'invention, on peut directement appliquer un revêtement, par exemple de vernis ou de peinture ; les revêtements appliqués sur les surfaces traitées selon l'invention adhérent au moins aussi bien que des revêtements appliqués sur les mêmes surfaces traitées par chromatation selon l'art antérieur.

Le traitement selon l'invention se substitue donc avantageusement aux traitements de chromatation ; contrairement aux traitements de chromatation, c'est un traitement sans risques de pollution et/ou de corrosion, et dont les effluents sont plus faciles à traiter.

Le traitement selon l'invention s'apparente donc à un traitement de passivation de surface.

En deuxième lieu, on constate que le traitement selon l'invention peut se substituer à un huilage de protection et/ou de lubrification.

D'une part, en traitant selon l'invention des tôles, on constate des avantages au niveau de leur résistance à la corrosion et au niveau de l'applicabilité d'un revêtement.

Au niveau de la résistance à la corrosion, le traitement selon l'invention apporte à lui seul une protection contre la corrosion supérieure à celle qu'on obtient par huilage de tôles, même passivées.

Au niveau de l'applicabilité d'un revêtement, on applique par exemple un vernis sur une tôle traitée selon l'invention beaucoup plus facilement que sur une tôle huilée pour stockage puis dégraissée : en effet, non seulement on évite une opération de dégraissage avant d'appliquer le vernis, mais en outre on n'observe plus de refus de vernis après application du vernis.

On constate cette disparition des refus de vernis, que la surface traitée selon l'invention ait été au préalablement huilée ou non.

D'autre part, on constate que le traitement selon l'invention améliore les propriétés tribologiques de la surface comme le ferait un huilage classique.

Ainsi des tôles traitées selon l'invention sont protégées contre la corrosion pendant une période de stockage comprise entre un jour et plusieurs mois, et restent directement utilisables, après stockage, tant pour une opération de mise en forme que pour une opération de revêtement, notamment de type vernis, sans autres opérations intermédiaires de dégraissage et de traitement de surface (type chromatation).

Le traitement selon l'invention est donc particulièrement avantageux en sortie de ligne de fabrication de tôle, en préparation du stockage et quelle que soit la destination de la tôle.

Entre la sortie de fabrication de tôle et l'entrée dans une installation de revêtement, on peut alors remplacer avantageusement la séquence huilage - dégraissage - chromatation par une seule opération de traitement de surface selon l'invention.

Le traitement selon l'invention permet donc de simplifier l'ordonnancement en sortie de ligne de fabrication de tôle, comme il permet de simplifier le revêtement de tôle, notamment par des vernis.

Dans les cas de vernissage ou de mise en peinture de tôle, comme le traitement selon l'invention est à la fois un traitement d'adhérisation, de passivation et de protection, il n'est pas du tout nécessaire d'appliquer le vernis ou la peinture directement après le traitement de surface, contrairement au procédé décrit dans le document US 5 103 550.

En effet, une période de stockage intermédiaire entre le traitement de surface et l'application du vernis ou de la peinture, d'une durée par exemple supérieure à une journée, ne pose ici aucun problème de perte d'adhérisation ou de risque de corrosion.

Un grand nombre de produits organiques utilisables pour mettre en oeuvre l'invention sont compatibles avec des applications alimentaires, notamment les acides gras, sans risques toxicologiques ni même de pollution au niveau des effluents, ce qui rend le procédé avantageux pour la préparation de tôle pour emballage alimentaire.

Enfin, on constate que la couche déposée en surface de la tôle selon l'invention résiste aux solvants, autrement dit, que la tôle traitée selon l'invention n'est pas facilement "dégraissable".

Ainsi, même après rinçage dans des solvants, la tôle traitée selon l'invention conserve-t-elle sa protection contre la corrosion et d'ailleurs également ses propriétés tribologiques.

Le traitement selon l'invention peut de ce fait se substituer à d'autres opérations que le huilage de tôle ; il peut, par exemple, remplacer le vernissage extérieur d'emballages métalliques alimentaires ; il peut, par exemple, servir à protéger et à lubrifier les fonds externes de boîtes métalliques empilables.

Par ailleurs, il s'avère difficile de faire adhérer un film polyoléfine, comme du polyéthylène, sur une tôle traitée selon l'invention ; cette caractéristique différencie nettement le traitement selon l'invention de traitements déjà connus par ailleurs dans lesquels on applique sur une tôle une couche monomoléculaire de produits organiques analogues à ceux de l'invention dans le but de préparer le collage d'un film polyoléfine, tel que décrit dans le document FR 1 395 228.

Dans ces traitements de préparation du collage, la température à laquelle on soumet le produit pendant ou après application reste toujours inférieure à celle qu'on utilise dans l'invention.

Pour la description de l'invention, on se référera également aux exemples suivants :

### Exemple 1 :

Cet exemple a pour but d'illustrer un mode de réalisation de l'invention dans lequel la pellicule de produit de traitement est simultanément appliquée et chauffée.

On cherche à traiter selon l'invention une tôle en fer blanc.

On trempe cette tôle à traiter dans un bain d'acide oléique chaud : soit pendant 5 secondes environ à 200°C environ, soit pendant 5 minutes environ à 140°C environ.

Après cette immersion, on obtient une tôle revêtue d'une pellicule d'acide oléique.

La majeure partie de l'acide oléique du film superficiel qui recouvre la tôle est sous forme liquide, mais une partie de l'acide oléique s'est fixée et réticulée sur la surface à traiter pendant l'immersion.

On rince ensuite la tôle dans un bain agité d'acétone pendant une minute environ, pour éliminer la partie de la pellicule appliquée qui ne s'est pas fixée et/ou réticulée.

Après rinçage (et séchage), on obtient alors une tôle traitée selon l'invention.

Pour contrôler le traitement selon l'invention, on peut vérifier par spectroscopie de photoélectrons ("XPS") que la proportion de radicaux COOH est supérieure ou égale à 10% sur la surface traitée ; une proportion insuffisante de radicaux carboxylates doit, conformément à l'invention, conduire à augmenter la durée et/ou la température de chauffage de la pellicule appliquée pendant le traitement.

### Exemple 2 :

Cet exemple a pour but d'illustrer un mode de réalisation de l'invention dans lequel la pellicule de produit de traitement est appliquée puis chauffée.

A l'aide d'une baguette rugueuse enduite d'acide oléique, on applique à froid une fine pellicule d'acide oléique sur la surface d'une tôle à traiter.

Après cette application, on obtient une tôle revêtue d'une pellicule d'acide oléique, essentiellement sous forme liquide, c'est à dire non fixée et non réticulée.

A ce stade du procédé, cette pellicule pourrait être facilement éliminée par rinçage dans un solvant.

On chauffe ensuite pendant environ 5 minutes la tôle à traiter à une température de environ 180°C.

On obtient alors une tôle traitée selon l'invention.

Dans ce mode de réalisation de l'invention, le rinçage dans un solvant n'est pas nécessaire, parce que la pellicule appliquée est déjà très fine et que la plus grande partie de l'acide oléique appliqué a pu se fixer et/ou se réticuler pendant le chauffage.

### Exemple 3 :

Cet exemple a pour but d'illustrer que le traitement de surface selon l'invention peut être effectué sur une tôle huilée, sans qu'il soit nécessaire de la dégraisser auparavant.

On cherche à traiter selon l'invention une tôle en fer blanc, grasse et huileuse ; une couche d'huile a donc été déposée sur la tôle pour assurer une protection temporaire contre la corrosion et présente par exemple une densité de 0,5 g/m2.

On procède ensuite comme dans l'exemple 1, à la différence qu'on augmente la durée d'immersion dans l'acide oléique chaud pour permettre la désorption de la couche huileuse dans l'acide oléique.

Comme la couche d'huile présente en surface de la tôle est soluble dans l'acide oléique, l'immersion dans l'acide oléique sert à la fois à nettoyer la surface de la tôle et à l'enduire d'acide oléique.

Après rinçage (et séchage), on obtient alors une tôle traitée selon l'invention.

Ainsi, grâce à l'invention, il n'est pas nécessaire d'effectuer de dégraissage lorsque l'on cherche à traiter selon l'invention des tôles grasses.

### Exemple 4 :

Cet exemple a pour but d'illustrer la protection contre la corrosion apportée par des traitements selon l'invention.

Pour évaluer la résistance à la corrosion d'une tôle traitée, on procède d'une manière connue en elle-même en soumettant des échantillons à tester à des cycles de corrosion sous atmosphère contrôlée (enceinte climatique) ; le test de corrosion consiste à évaluer le nombre de cycles (1 à 20) nécessaires pour d'une part voir apparaître la rouille, pour d'autre part observer un enrouillement complet de l'échantillon.

On procède à ce test sur trois types d'échantillons :
- un échantillon de référence en fer blanc passivé et huilé selon l'art antérieur,
- un échantillon selon l'exemple 1, directement traité à l'acide oléique,

Les résultats sont reportés au tableau I (tests de corrosion atmosphérique).

**Tableau I :**

| tests de corrosion atmosphérique. | | |
|---|---|---|
| Nombre de cycles nécessaires pour: | | |
| Echantillon... | Apparition rouille | Enrouillement complet |
| ...de référence | 4 | 7 |
| ... traité acide oléique | > 20 | > 20 |

On constate donc que le traitement selon l'invention apporte une résistance à la corrosion supérieure à celle des traitements qu'on utilise couramment pour une protection temporaire comme le huilage.

### Exemple 5 :

Cet exemple a pour but d'illustrer l'avantage qu'apporte l'invention pour préparer une surface métallique à un revêtement, notamment de vernis.

Le but essentiel recherché par l'application d'un vernis sur une tôle est d'apporter une très forte résistance à la corrosion, notamment la corrosion aqueuse.

Pour évaluer la résistance à la corrosion - ici, corrosion aqueuse - d'échantillons vernis à tester, on les soumet à un test standard de corrosion puis on mesure le niveau de corrosion sur ces échantillons.

Le test standard de corrosion consiste à tremper les échantillons dans une solution aqueuse contenant 50 g/l d'acide citrique, à les maintenir dans cette solution pendant une heure à ébullition puis pendant sept jours à température ambiante.

Pour mesurer le niveau de corrosion, on évalue ensuite d'une part sur quelle largeur (notamment autour des bords) le vernis est éventuellement décollé de la tôle, d'autre part la densité éventuelle de "blush" sur la surface vernie (une partie importante de la surface - en % - couverte de "blush" traduit une mauvaise résistance à la corrosion).

On appelle "blush" des voiles blanchâtres qui peuvent apparaître sur une surface vernie, par exemple sur la surface interne d'un emballage métallique, après stérilisation des aliments qu'il contient ; ces "blush" résultent par exemple d'une hydrolyse partielle et/ou localisée des liaisons métal-vernis et/ou de décollements localisés du vernis.

Selon cette procédure, on évalue la résistance à la corrosion de plusieurs échantillons revêtus du même vernis protecteur :
- un échantillon de référence ("réf.1") est en fer noir vernis sans préparation de surface ;
- un autre échantillon de référence ("réf.2") est en fer noir vernis après préparation de surface selon l'art antérieur, c'est à dire après chromatation.
- un échantillon selon l'invention ("lnv."), en fer noir vernis après traitement de surface selon l'invention, en utilisant l'acide oléique comme dans l'exemple 1.

Les résultats sont reportés au tableau Il (tests de corrosion aqueuse - fer noir vernis).

**Tableau II :**

| tests de corrosion aqueuse - fer noir vernis. | | |
|---|---|---|
| Observations ... | ... des bords : | ... de la surface : |
| Echantillon... | largeur de décollement | densité de blush |
| Réf.1 : non traité- vernis | 10 à 15 mm | généralisé (40% surface) |
| Réf.2 : traité-vernis | 2 à 4 mm | sans (# 0% surface) |
| Inv. : traité-vernis | 2 à 4 mm | limité (20% surface) |

Selon la même procédure, on évalue la résistance à la corrosion de plusieurs échantillons vernis réalisé à partir de fer blanc, au lieu de fer noir.

Les résultats sont reportés au tableau III (tests de corrosion aqueuse - fer blanc vernis).

**Tableau III :**

| tests de corrosion aqueuse - fer blanc vernis. | | |
|---|---|---|
| Observations ... | ... des bords : | ... de la surface : |
| Echantillon... | largeur de décollement | densité de blush |
| Réf.1 : non traité- vernis | 5 à 6 mm | non mesuré |
| Réf.2 : traité-vernis | environ 4 mm | sans (# 0% surface) |
| Inv. : traité-vernis | environ 2 mm | sans (# 0% surface) |

On constate donc que le traitement de surface selon l'invention améliore sensiblement la protection contre la corrosion qu'apporte une couche de vernis sur cette surface (cette amélioration pouvant rester inférieure à ce qu'on obtient avec une chromatation) en évitant les inconvénients, notamment de pollution et de corrosion, liés à l'emploi de solutions de chromatation.

### Exemple 6 :

Cet exemple a également pour but d'illustrer l'avantage qu'apporte l'invention pour préparer l'application d'un vernis.

Sur des échantillons de fer blanc, de fer chromé, de fer noir, et à l'aide d'installations industrielles de vernissage, on applique deux vernis époxyphénoliques classiques après préparation de surface, par chromatation comme dans l'art antérieur d'une part, ou selon l'invention d'autre part.

Des tests d'adhérence de la couche de vernis et d'emboutissabilité des échantillons vernis donnent des résultats satisfaisants et comparables quelle que soit la solution retenue.

Lors de l'application du vernis, on n'observe par contre aucun refus de vernis dans le cas des échantillons traités selon l'invention, contrairement au cas des échantillons traités par chromatation selon l'art antérieur.

Le traitement selon l'invention simplifie les opérations de préparation de surface (pas de risques de pollution et/ou de corrosion chrome) et améliore ou maintient au moins l'aptitude au vernissage des surfaces métalliques (pas de risques de refus de vernis).

### Exemple 7:

Cet exemple a pour but d'illustrer les propriétés lubrifiantes qu'apporte le traitement selon l'invention.

Sur différents échantillons de fer blanc, on procède à des mesures de coefficient de frottement selon la méthode dite "ALTEK".

La méthode ALTEK consiste à déposer, sur la surface à tester, un poids de trois kilogrammes reposant sur la surface par l'intermédiaire de trois pieds demi-spériques et à mesurer la force nécessaire pour faire glisser le poids sur cette surface ; le rapport force/poids donne le coefficient de frottement.

Les résultats obtenus sont reportés au tableau IV (tests de glissance).

**Tableau IV:**

| tests de glissance | | | | |
|---|---|---|---|---|
| Echantillon | huilé | traité invention non dégraissé | traité invention dégraissé avec acétone | vernis |
| Coef.frottement | > 0,25 | 0,158 | 0,143 | 0,05 à 0,10 |

Le traitement selon l'invention améliore les propriétés tribologiques de la surface, sans forcément atteindre le niveau de lubrification apporté un huilage classique de l'art antérieur, ni, a fortiori, celui apporté par une couche de vernis.

### Exemple 8 :

Cet exemple a pour but d'illustrer la mise en oeuvre de l'invention à l'aide d'autres produits de traitement de surface que l'acide oléique.

En procédant comme dans l'exemple 1 sur des échantillons de tôle en fer blanc, on traite la surface de ces échantillons à l'aide de différents types de produits organiques, puis on dépose sur ces échantillons la même couche de vernis.

Pendant la préparation de ces échantillons, on procède à des tests d'application :
- test de "traitabilité" au niveau du traitement de surface préalable au vernissage : elle est considérée comme facile quand le produit de traitement est facile à appliquer.
- test de corrosion : après le traitement mais avant le vernissage, on mesure le nombre de cycles pour obtenir soit l'apparition de la rouille ("apparition") soit un enrouillement complet ("complet") selon la même procédure que dans l'exemple 4.
- test de vernissabilité (cf. exemple 6) au niveau de l'opération de vernissage: elle est considérée comme "bonne" en absence de refus de vernis et quand on obtient une bonne adhérence du vernis sur la surface traitée.

On prépare également un échantillon dit de référence en rajoutant une opération de dégraissage, de chromatation puis de vernissage à la préparation de l'échantillon de référence de l'exemple 4.

Les résultats obtenus figurent au tableau V (produits de traitement selon l'invention).

La valeur de "C" entre parenthèses indiquée au regard de chaque produit de traitement correspond au nombre d'atomes de carbone dans la chaîne linéaire apolaire du produit, sans prendre en compte les atomes de carbones greffés sur la chaîne ou ceux du radical polaire d'extrémité du produit.

**Tableau V**

| - produits de traitement selon l'invention - | | | | |
|---|---|---|---|---|
| Test Application: | Applicabilité | Corrosion/enrouillement Apparition.Complet | | Vernissabilité |
| Produit de traitement | | | | |
| Acide oléique (C= 17) | facile | >20 | >20 | bonne |
| Acide palmitique (C=22) | difficile | >20 | >20 | bonne |
| Epoxyoctane | facile | 6 | 14 | bonne |
| Référence (cf. ex.4) | (sans objet) | 4 | 7 | bonne |

En comparant les échantillons, entre la sortie de fabrication d'une tôle (ici revêtue d'une couche métallique d'étain) et son entrée dans une ligne de revêtement (ici : vernissage), les opérations sont :
- pour l'échantillon de référence : huilage, dégraissage, chromatation, soit trois opérations.
- pour les échantillons selon l'invention : seulement une opération de traitement de surface selon l'invention, puisque le même traitement est à la fois efficace pour protéger contre la corrosion et pour préparer un revêtement.

Ainsi, grâce à l'invention, on simplifie considérablement les opérations de préparation de tôles revêtues, notamment vernies ou peintes.

## Revendications

1. Traitement de surface de tôle métallique, **caractérisé en ce que** :
- on applique sur ladite surface métallique une pellicule homogène d'un produit organique à base de molécules dont l'ossature principale est en forme de chaîne linéaire apolaire formée de liaisons carbone-carbone saturées à une extrémité et dotée, seulement à l'autre extrémité, d'un radical polaire,
- on chauffe ladite pellicule à une température et pendant une durée adaptées pour fixer une partie dudit produit sur ladite surface et pour faire partiellement réticuler ledit produit sur ladite surface,
- et, le cas échéant, à l'aide d'un solvant dudit produit organique, on élimine ensuite de ladite pellicule la quantité de produit organique qui n'est pas fixée et/ou réticulée sur ladite surface.

2. Traitement de surface selon la revendication 1 **caractérisé en ce qu'**on adapte les conditions d'application et de chauffage de ladite pellicule de manière à ce que, après traitement, la proportion desdits radicaux polaires à la surface de la pellicule soit supérieure à la proportion stoechiométrique de ces radicaux dans les molécules dudit produit organique .

3. Traitement de surface selon l'une quelconque des revendications précédentes **caractérisé en ce que** ledit radical polaire est choisi parmi l'un au moins des radicaux suivants : acide carboxylique, phénolique, époxy, vinyle, amine ou silane.

4. Tôle d'acier, nu ou revêtu d'une couche métallique, revêtue en surface externe d'un film dudit produit organique, réticulé et fixé, résultant du traitement de surface de ladite tôle selon l'une quelconque des revendications précédentes.

5. Tôle selon la revendication 4 **caractérisé en ce que** l'épaisseur dudit film comprend au moins deux couches monomoléculaires dudit produit organique.

6. Tôle d'acier revêtu d'une couche métallique selon l'une quelconque des revendications 4 à 5, **caractérisé en ce que** ladite couche métallique est en zinc, alliage de zinc, étain, ou alliage d'étain, chrome ou alliage de chrome.

7. Procédé d'application de vernis sur la surface d'une tôle d'acier, nu ou revêtu d'une couche métallique, dans lequel :
- dans une première étape, on traite ladite surface selon l'une quelconque des revendications 1 à 3,
- puis, dans une deuxième étape, on applique à proprement parler ledit vernis directement sur ladite surface traitée.

8. Procédé selon la revendication 7 **caractérisé en ce que** la période s'écoulant entre ladite première étape et ladite seconde étape est supérieure à 1 jour.

9. Procédé selon l'une quelconque des revendications 7 à 8, **caractérisé en ce que** ledit vernis est de type polaire.

10. Utilisation d'une tôle d'acier vernie selon l'une quelconque des revendications 7 à 9 pour la fabrication d'emballage d'aliments liquides ou solides.

11. Procédé de mise en forme d'une tôle d'acier, nu ou revêtu d'une couche métallique, à l'aide d'un outil de mise en forme, dans lequel :
- dans une première étape, on traite la surface de la tôle devant être mise en contact avec ledit outil de mise en forme selon l'une quelconque des revendications 1 à 3,
- et, dans une deuxième étape, on procède à la mise en forme à proprement parler à l'aide dudit outil.

12. Procédé selon la revendication 11 **caractérisé en ce que** la période s'écoulant entre ladite première étape et ladite seconde étape est supérieure à 1 jour.

## Claims

1. Surface treatment for a metal sheet, **characterized in that**:
- a uniform film of an organic product, based on molecules whose main backbone is in the form of an apolar linear chain formed from saturated carbon-carbon bonds at one end and provided, only at the other end, with a polar radical, is applied to the said metal surface;
- the said film is heated to a temperature and for a time that are suitable for fixing part of the said product on the said surface and for making the said product on the said surface partially crosslinked; and
- if required, the amount of organic product that is not fixed and/or crosslinked on the said surface is then removed from the said film using a solvent for the said organic product.

2. Surface treatment according to Claim 1, **characterized in that** the conditions for applying and for heating the said film are tailored so that, after the treatment, the proportion of the said polar radicals at the surface of the film is greater than the stoichiometric proportion of these radicals in the molecules of the said organic product.

3. Surface treatment according to any one of the preceding claims, **characterized in that** the said polar radical is chosen from at least one of the following radicals: carboxylic acid, phenolic, epoxy, vinyl, amine or silane.

4. Steel sheet, bare or coated with a metal layer, coated on the external surface with said organic product, which is crosslinked and fixed, resulting from the surface treatment of the said sheet according to any one of the preceding claims.

5. Sheet according to Claim 4, **characterized in that** the thickness of the said film comprises at least two monomolecular layers of the said organic product.

6. Steel sheet coated with a metal layer according to either of Claims 4 and 5, **characterized in that** the said metal layer is made of zinc, a zinc alloy, tin, a tin alloy, chromium or a chromium alloy.

7. Process for applying varnish to the surface of a steel sheet, bare or coated with a metal layer, in which:
- in a first step, the said surface is treated according to any one of Claims 1 to 3; and then
- in a second step, the said varnish proper is applied directly to the said treated surface.

8. Process according to Claim 7, **characterized in that** the period elapsing between the said first step and the said second step is greater than one day.

9. Process according to either of Claims 7 and 8, **characterized in that** the said varnish is of the polar type.

10. Use of a steel sheet varnished according to any one of Claims 7 to 9, for the manufacture of packaging for liquid or solid food.

11. Process for forming a steel sheet, bare or coated with a metal layer, using a forming tool, in which:
- in a first step, the surface of the sheet that has to be brought into contact with the said forming tool is treated according to any one of Claims 1 to 3; and
- in a second step, the actual forming operation is carried out using the said tool.

12. Process according to Claim 11, **characterized in that** the period elapsing between the said first step and the said second step is greater than one day.

## Patentansprüche

1. Oberflächenbehandlung eines Metallblechs, **dadurch gekennzeichnet, dass**:
- auf die metallische Oberfläche ein homogener Film eines organischen Produkts auf der Basis von Molekülen aufgebracht wird, deren Hauptgerüst in Form einer apolaren linearen Kette vorliegt, die aus Kohlenstoff-Kohlenstoff-Bindungen gebildet wird, welche an einem Ende gesättigt sind, und die nur an dem anderen Ende eine polare Gruppe trägt,
- der Film während einer Zeitspanne auf eine Temperatur erwärmt wird, die geeignet ist, um einen Teil des Produkts auf der Oberfläche zu fixieren und das Produkt auf der Oberfläche teilweise zu vernetzen, und
- gegebenenfalls anschließend mit Hilfe eines Lösungsmittels für das organische Produkt aus dem Film den Anteil des organischen Produkts zu entfernen, der nicht auf der Oberfläche haftet und/oder nicht vernetzt ist.

2. Oberflächenbehandlung nach Anspruch 1, **dadurch gekennzeichnet, dass** die Bedingungen beim Auftragen und Erwärmen des Films so gewählt sind, dass nach der Behandlung der Anteil der polaren Gruppen an der Oberfläche des Films über dem stöchiometrischen Anteil dieser Gruppen in den Molekülen des organischen Produkts liegt.

3. Oberflächenbehandlung nach einem der vorhergehenden Ansprüche, **dadurch gekennzeichnet, dass** die polare Gruppe unter mindestens einer der folgenden Gruppen ausgewählt ist: Carbonsäure, Phenolgruppe, Epoxygruppe, Vinylgruppe, Aminogruppe oder Silangruppe.

4. Stahlblech, das blank oder mit einer Metallschicht überzogen ist und das an der äußeren Oberfläche mit einem Film des vemetzten und fixierten organischen Produkts beschichtet ist, der bei der Oberflächenbehandlung des Blechs nach einem der vorhergehenden Ansprüche gebildet wird.

5. Stahlblech nach Anspruch 4, **dadurch gekennzeichnet, dass** die Dicke des Films mindestens zwei monomolekulare Schichten des organischen Produkts beträgt.

6. Stahlblech nach einem der Ansprüche 4 bis 5, das mit einer Metallschicht überzogen ist, **dadurch gekennzeichnet, dass** die Metallschicht aus Zink, einer Zinklegierung, Zinn, einer Zinnlegierung, Chrom oder einer Chromlegierung besteht.

7. Verfahren zum Aufbringen von Lack auf die Oberfläche eines Stahlblechs, das blank vorliegt oder mit einer Metallschicht beschichtet ist, mit den folgenden Schritten:
- in einem ersten Schritt wird die Oberfläche nach einem der Ansprüche 1 bis 3 behandelt, und
- anschließend wird dann in einem zweiten Schritt genau genommen der Lack direkt auf die behandelte Oberfläche aufgebracht.

8. Verfahren nach Anspruch 7, **dadurch gekennzeichnet, dass** die Zeitspanne zwischen dem ersten Schritt und dem zweiten Schritt über einem Tag liegt.

9. Verfahren nach einem der Ansprüche 7 bis 8, **dadurch gekennzeichnet, dass** der Lack ein Lack vom polaren Typ ist.

10. Verwendung eines nach einem der Ansprüche 7 bis 9 lackierten Stahlblechs zur Herstellung von Verpackungen für flüssige oder feste Lebensmittel.

11. Verfahren zur Formgebung eines Stahlblechs, das blank oder mit einer Metallschicht überzogen ist, mit Hilfe eines Formwerkzeugs, wobei:
- in einem ersten Schritt die Oberfläche des Blechs, bevor es mit dem Formwerkzeug in Kontakt gebracht wird, nach einem der Ansprüche 1 bis 3 behandelt wird, und
- in einem zweiten Schritt die Formgebung mit dem Formwerkzeug erfolgt.

12. Verfahren nach Anspruch 11, **dadurch gekennzeichnet, dass** die Zeitspanne zwischen dem ersten Schritt und dem zweiten Schritt über einem Tag liegt.
